# EUROPEAN PATENT APPLICATION

(11) **EP 1 688 882 A2**
(43) Date of publication of application: **09.08.2006**
(21) Application number: 06100501.3
(22) Date of filing: 18.01.2006
(51) Int. Cl.: G06T 5/40, H04N 5/00

(54) **Gradation interpolating circuit and gradation interpolating method**

(30) Priority: 08.02.2005 JP 2005032098
(71) Applicant: KABUSHIKI KAISHA TOSHIBA, Tokyo 105-8001 (JP)
(72) Inventor: Obara, Eiki c/o Toshiba Corporation, Minato-ku, Tokyo 105-8001 (JP)
(74) Representative: Henkel, Feiler & Hänzel

(57) **Abstract**

A gradation interpolating circuit is configured to receive an image signal having a boundary line, and to change a gradation pattern in a plurality of frames in accordance with a predetermined formula, with respect to an image in a region surrounded by a pixel parallel to the boundary line and a pixel vertical thereto, thereby reconstructing a pixel value to further express an intermediate gradation of an image in a region in front and back of the boundary line.

## Description

The present invention relates to a picture signal processor apparatus for digitally processing a picture signal. In particular, the present invention relates to a gradation interpolating circuit and a gradation interpolating method that enable natural gradation expression by eliminating a boundary line of stripe patterns generated in a gradation region in a display image.

Conventionally, primarily in a picture signal processor apparatus (commonly referred to as a graphic board) of a personal computer (PC), a picture signal is processed by eight-bit gradation; and the processed signal is finally converted to six-bit gradation. Then, a dither process is applied by the reduced two bits, and the dithered signal is output to a display, thereby achieving an eight-bit equivalent gradation expression. In addition, in a picture signal processor apparatus of a television image receiver (TV) using digital processing, a picture signal is processed by ten-bit gradation; and the processed signal is finally converted to eight-bit gradation. Then, a dither process (referred to as frame rate control (FRC)) called a magic square algorithm, for example, is applied by the reduced two bits, and the dithered signal is output to a display, thereby achieving a 10-bit equivalent gradation expression.

However, in the conventional picture signal processor apparatus as described above, although roughness of quantization of a picture signal is reduced by the dither process, a step in switch portion of quantizing bits becomes highly visible in a gradation region in which a gradation gradually changes, and this step is displayed as a stripe pattern.

In addition, as a prior art associated therewith, in Patent Document 1 (Jpn. Pat. Appln. KOKAI Publication No. 2000-13607), there is disclosed an imaging process utilizing a blurring process, wherein a gradation between an edge region and a non-edge region is subjected to the blurring process by means of an averaging filter so as to eliminate the gradation with respect to an edge of an image.

However, in the prior art of Patent Document 1 described above, there is a problem that, in a gradation region contained in a picture signal, although the roughness of quantization of the picture signal is reduced by the blurring process, the step in the switch portion of quantizing bits becomes outstanding, and this step is displayed as a stripe pattern.

It is an object of the present invention to provide a gradation interpolating circuit and a gradation interpolating method for detecting a boundary line of a stripe pattern generated in a gradation region or the like contained in a display image due to the roughness of quantization of a picture signal, thereby eliminating the stripe pattern.

According to an aspect of the present invention, there is provided a gradation interpolating circuit for receiving an image signal having a boundary line and changing a gradation pattern at a plurality of frames with respect to an image in a region surrounded by a pixel parallel to the boundary line and a pixel vertical thereto, according to a predetermined formula, thereby reconstructing a pixel value in order to further express an intermediate gradation of an image in a region in front and back of the boundary line.

According to the above-described invention, for example, gradation interpolation is carried out upon receiving an image signal in a gradation region or the like having a boundary line. The gradation interpolating process used here denotes that an image of a flat region sandwiching a boundary line is allocated at a position including the boundary line, and a pixel value of an image region in the left and right regions of the boundary line is reconstructed in order to further express an intermediate gradation of the pixel value of the image region in front and back of the boundary line. At this time, a gradation pattern is changed with respect to a plurality of frames, thereby making it possible to further express the pixel value of the image region in front and back of the boundary line. In this manner, there can be provided a gradation interpolating circuit and method capable of detecting the step of the stripe pattern generated in the gradation region contained in the display image due to the roughness of quantization of the picture signal, thereby eliminating the stripe pattern.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a conceptual view adopted to explain an interpolating process of a gradation processor circuit according to the invention;
FIG. 2 is a block diagram depicting an example of a configuration of the gradation processor circuit according to the invention;
FIG. 3 is an illustrative view illustrating an example of a first gradation interpolating process carried out by the gradation processor circuit according to the invention;
FIG. 4 is an illustrative view illustrating an example of a second gradation interpolating process carried out by the gradation processor circuit according to the invention;
FIG. 5 is an illustrative view illustrating an example of a third gradation interpolating process carried out by the gradation processor circuit according to the invention;
FIG. 6 is an illustrative view illustrating an example of a fourth gradation interpolating process carried out by the gradation processor circuit according to the invention;
FIG. 7 is an illustrative view illustrating an example of a fifth gradation interpolating process carried out by the gradation processor circuit according to the invention;
FIG. 8 is an illustrative view illustrating an example of a sixth gradation interpolating process carried out by the gradation processor circuit according to the invention;
FIG. 9 is an illustrative view illustrating an example of a seventh gradation interpolating process carried out by the gradation processor circuit according to the invention;
FIG. 10 is an illustrative view illustrating an example of an eighth gradation interpolating process carried out by the gradation processor circuit according to the invention;
FIG. 11 is an illustrative view illustrating an example of a ninth gradation interpolating process carried out by the gradation processor circuit according to the invention;
FIG. 12 is an illustrative view illustrating an example of a tenth gradation interpolating process carried out by the gradation processor circuit according to the invention;
FIG. 13 is a block diagram depicting an example of a whole configuration of a TV broadcast receivable PC to which the present invention is applied;
FIG. 14 is a block diagram depicting an example of a specific configuration of a gradation processor circuit according to the invention, the circuit being used for a PC;
FIG. 15A is a flow chart showing an example of an algorithm in the case where a process for detecting a gradation step in a horizontal direction of the gradation processor circuit shown in FIG. 14 is achieved by means of software processing;
FIG. 15B is a flow chart showing an example of an algorithm that follows FIG. 15A;
FIG. 15C is a flow chart showing an example of an algorithm in the case where a process for detecting a gradation step in a vertical direction of the gradation processor circuit shown in FIG. 14 is achieved by means of software processing;
FIG. 15D is a flow chart showing an example of an algorithm that follows FIG. 15C;
FIG. 16 is a block diagram depicting an example of a whole configuration of a television image receiver to which the present invention is applied; and

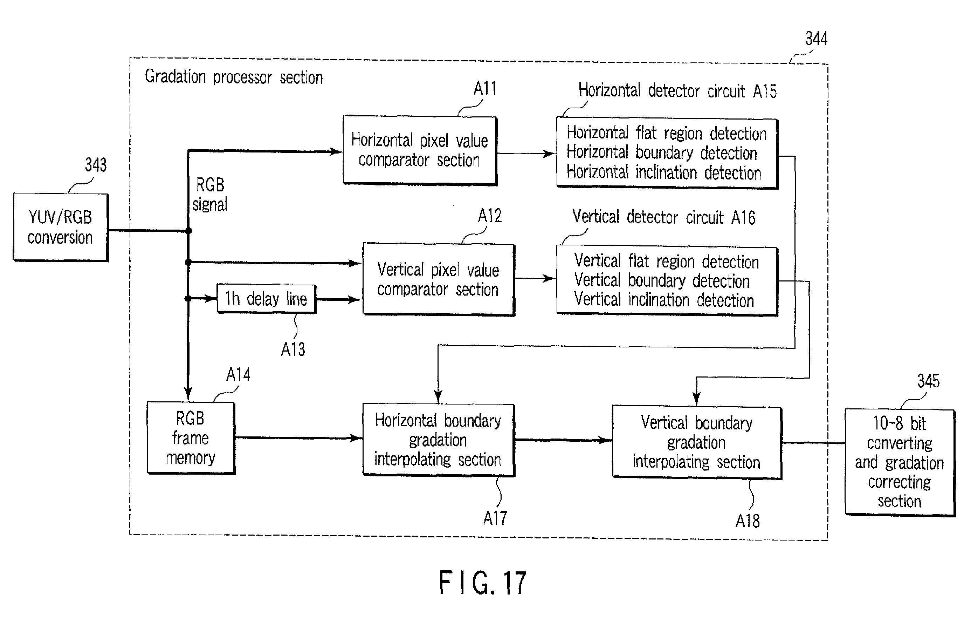

FIG. 17 is a block diagram depicting an example of a specific configuration of a gradation processor circuit according to the invention, the circuit being used for the television image receiver shown in FIG. 16.

Hereinafter, preferred embodiments of the present invention will be described in detail with reference to the accompanying drawings.

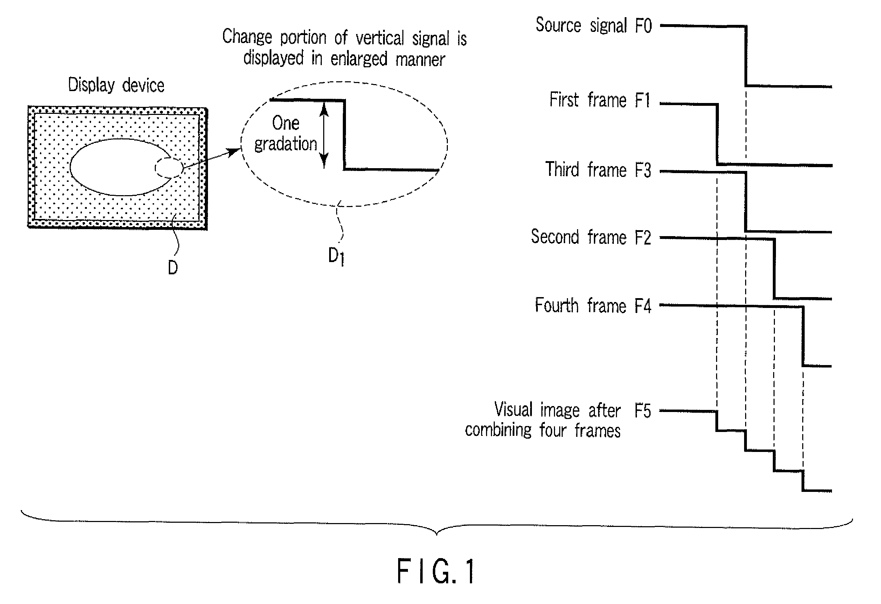

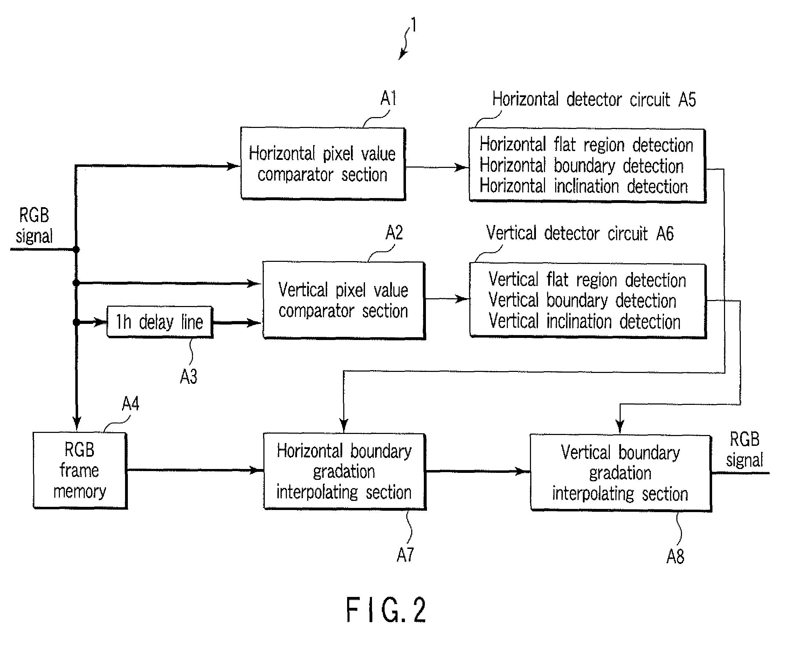

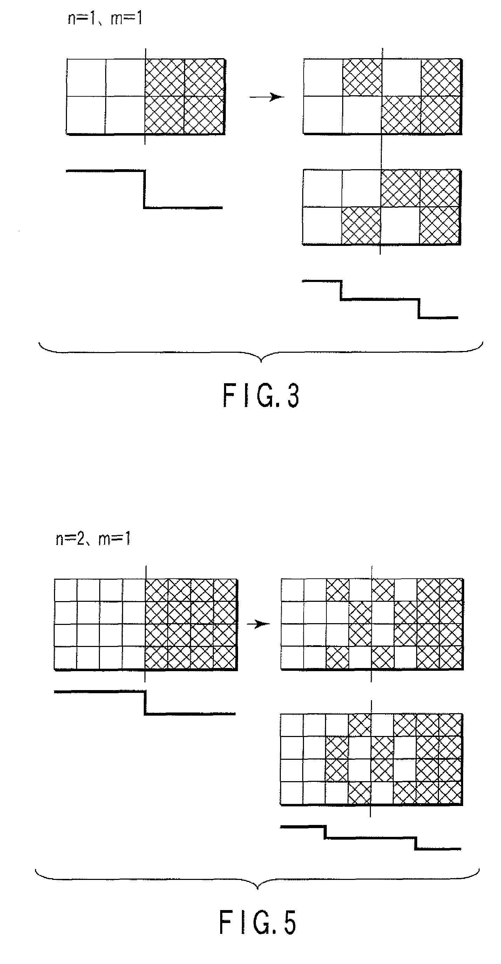

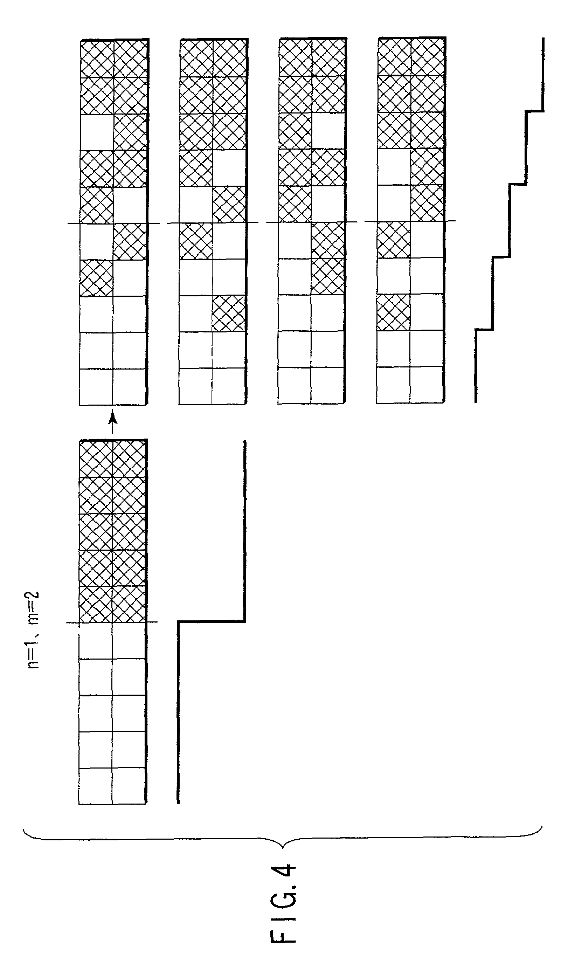

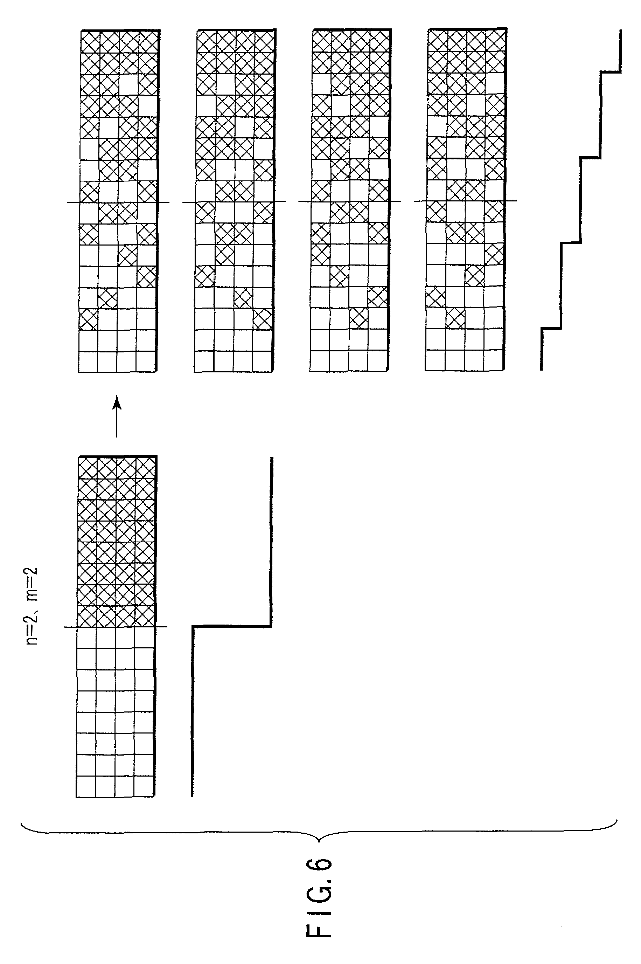

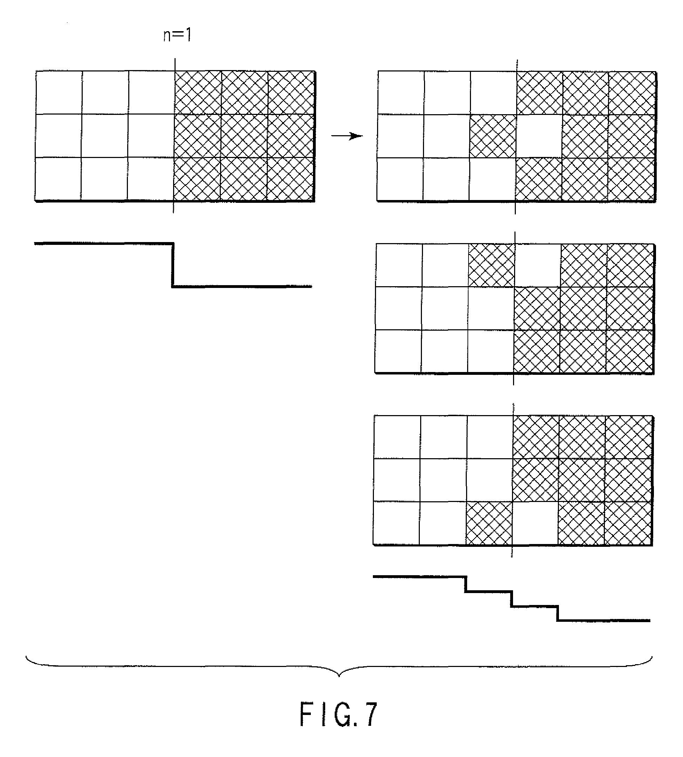

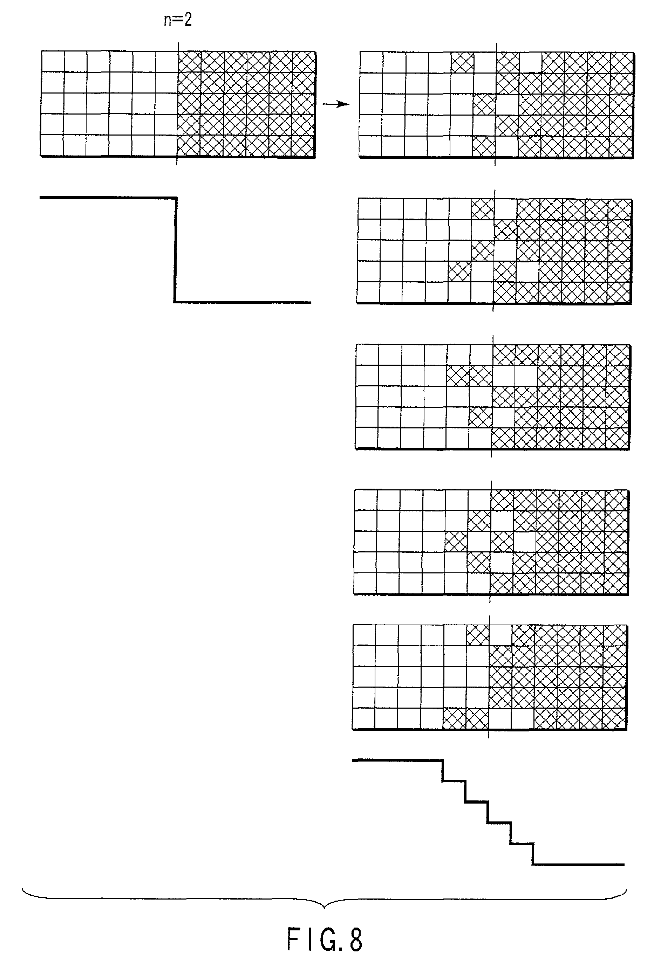

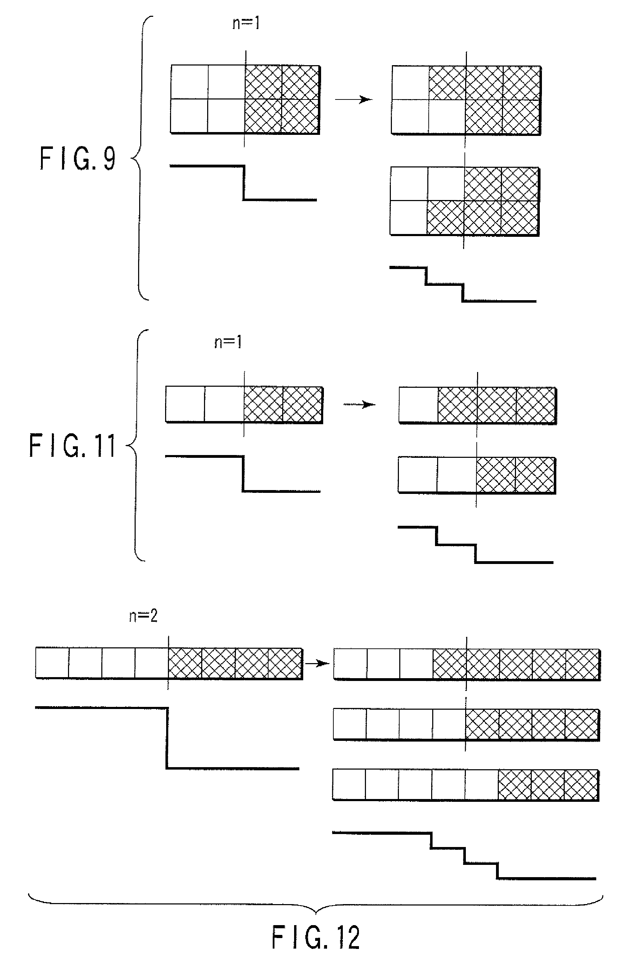

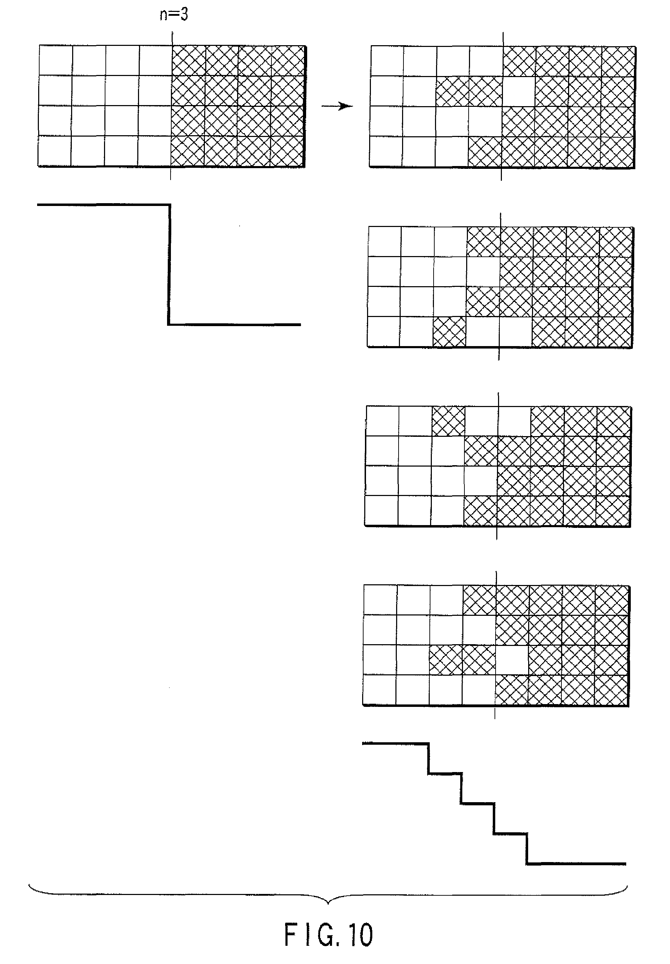

FIG. 1 is a conceptual view adopted to explain an interpolating process of a gradation processor circuit according to the preset invention; FIG. 2 is a block diagram depicting an example of the gradation processor circuit according to the invention; FIG. 3 is an illustrative view illustrating an example of a first gradation interpolating process carried out by the gradation processor circuit according to the invention; FIG. 4 is an illustrative view illustrating an example of a second gradation interpolating process carried out by the gradation processor circuit according to the invention; FIG. 5 is an illustrative view illustrating an example of a third gradation interpolating process carried out by the gradation processor circuit according to the invention; FIG. 6 is an illustrative view illustrating an example of a fourth gradation interpolating process carried out by the gradation processor circuit according to the invention; FIG. 7 is an illustrative view illustrating an example of a fifth gradation interpolating process carried out by the gradation processor circuit according to the invention; FIG. 8 is an illustrative view illustrating an example of a sixth gradation interpolating process carried out by the gradation processor circuit according to the invention; FIG. 9 is an illustrative view illustrating an example of a seventh gradation interpolating process carried out by the gradation processor circuit according to the invention; FIG. 10 is an illustrative view illustrating an example of an eighth gradation interpolating process carried out by the gradation processor circuit according to the invention; FIG. 11 is an illustrative view illustrating an example of a ninth gradation interpolating process carried out by the gradation processor circuit according to the invention and FIG. 12 is an illustrative view illustrating an example of a tenth gradation interpolating process carried out by the gradation processor circuit according to the invention.

### <Example of configuration of gradation interpolating circuit according to the invention>

First, an outline of a gradation interpolating circuit according to the invention will be described with reference to FIGS. 1 and 2. Now, as shown in FIG. 1, it is presumed that a stripe of a slightly bright elliptical shape with respect to a background color has been imaged at a center part of a screen D of a display device. Assuming that a brightness difference is one gradation (1/256 of dynamic range in the case of quantized 8 bits), if a signal of a horizontal portion is expanded on a boundary line between a brighter portion and a dark portion, a one-gradation step as shown in an expanded portion D1 is produced. A position of a boundary line portion and an inclination of brightness can be obtained by each of inclination detecting functions of a horizontal detecting section A5 and a vertical detecting section A6 shown in FIG. 2. With respect to this boundary line portion, in an example of a television screen D, an inclination occurs to the dark matter from the left to the right of the screen at the boundary line portion. In contrast, a gradation interpolating process is applied so as to transversely swing a position of the boundary line in units of frames.

That is, as shown in a timing chart of signals F0 to F5 shown in FIG. 1, with respect to a source signal F0, the position of the boundary line is transversely swung at the four frame periods of frame 1, frame 2, frame 3, and frame 4. In this manner, in the case where a user watches a television screen or the like, a visual image after 4-frame combined is visually produced, and the thus produced image is visually felt so that a fine gradation expression in steps of 1/4 gradation is made. In the case of this example, although signal processing is expressed by eight bits, 10-bit expression can be carried out near the boundary line. Such an operation is applied to the whole boundary line portion in a horizontal direction and in a vertical direction, thereby making it possible to obscure the stripe pattern generated due to quantization.

FIG. 2 shows an example of a configuration of a gradation processor circuit 2 for that purpose. In FIG. 2, an RGB signal Imparted from the outside is input to each of a horizontal pixel value comparator circuit A1, a vertical pixel value comparator circuit A2, an IH delay line A3, and an RGB frame memory circuit A4.

The horizontal pixel value comparator circuit A1 makes serial comparison with respect to pixel values of the adjacent two pixels. The horizontal detector circuit A5 detects each of a horizontal flat region, a horizontal boundary line, and a horizontal inclination by using a comparison result obtained by a comparator circuit A11. Specifically, the comparator circuit A1 detects as a horizontal flat region (gradation region) a region in which a difference between the pixel values compared by means of the comparator circuit A1 is within a predetermined range, and obtains a boundary line in a horizontal direction of this detected region. Then, in the case where a difference between the pixel values in a region in front and back of the boundary line or a degree of change (inclination) is within a predetermined range, the boundary line in the horizontal direction is determined to be a step contained in a gradation region. In the case where the above difference or degree of change is out of the predetermined range, it is determined to be a boundary line between other regions.

On the other hand, the vertical pixel value comparator circuit A2 makes serial comparison with respect to the pixel values of two pixels arranged in a vertical direction by capturing a direct input of an RGB signal and an 1H-delayed RGB signal. The vertical detector circuit A6 detects each of a vertical flat region, a vertical boundary line, and a vertical inclination by using a comparison result obtained by the comparator circuit A2. Specifically, a region in which a difference between the pixel values compared by means of the comparator circuit A2 is within a predetermined range is detected as a vertical flat region, and a boundary lime in a vertical direction of this detected region is obtained. Then, in the case where a difference between the pixel values in front and back of the boundary line or a degree of change (inclination) is within a predetermined range, the boundary line in the vertical direction is determined to be a step in a gradation region. In the case where the above difference or degree of change is out of the predetermined range, it is determined to be a boundary line between other regions.

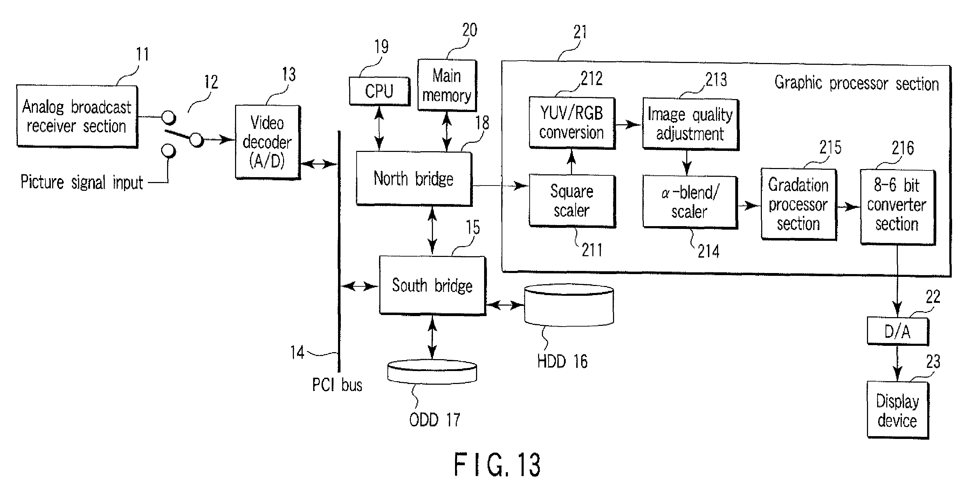

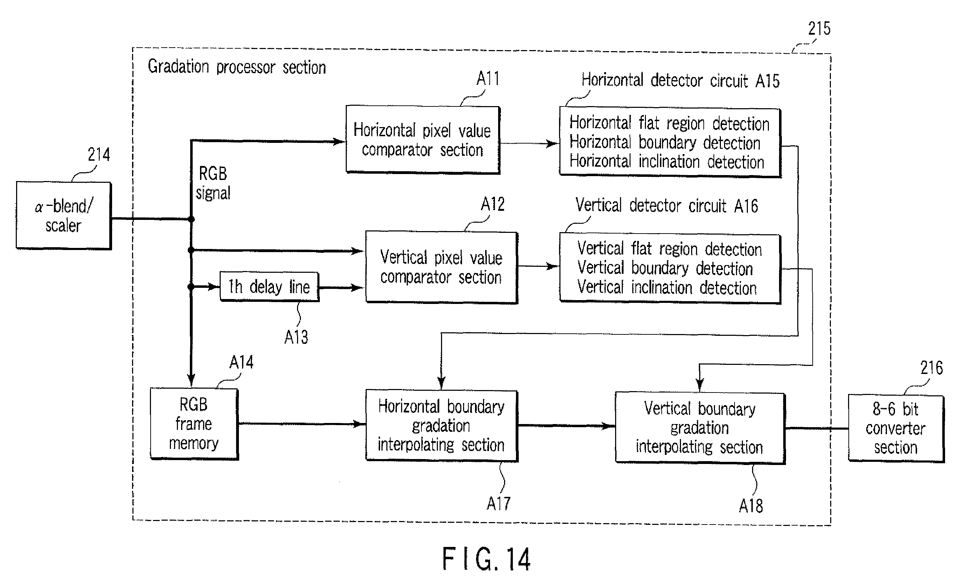

The RGB frame memory circuit A4 delays an input RGB signal by one frame, thereby ensuring a time required for the above comparing and detecting processes. The RGB signal thus delayed by one frame is output from a gradation processor circuit 215 via the horizontal boundary gradation interpolating circuit A7 and the vertical boundary gradation interpolating circuit A8, and the output signal is sent to a bit converter circuit 216 (refer to FIGS. 13 and 14).

In the case where the horizontal detector circuit A5 has determined that the boundary line in the flat region is a step (boundary line) in the gradation (flat) region, the horizontal boundary gradation interpolating circuit A7 applies a gradation interpolating process as shown in FIG. 1, and obscures a step of the boundary line portion. Similarly, in the case where the vertical detector circuit A6 has determined that the boundary line in the flat region is a step in the gradation region, the vertical boundary gradation interpolating circuit A8 applies the gradation interpolating process as shown in FIG. 1, and obscures a stripe pattern of the boundary line portion.

By using the above process, a step (boundary line) of a stripe pattern generated in the gradation region can be detected so as to be distinguished from the boundary line using an icon, and a gradation interpolating process is carried out such that this boundary line portion becomes obscure.

Such a gradation processor circuit 1 can be mounted on a PC or can be applied to a picture signal processor apparatus or a television receiver and the like described later. This processor circuit can detect a step of a stripe pattern generated in a gradation region contained in a display image due to the roughness of quantization of a picture signal. In addition, this processor circuit can acquire a difference between the pixel values of the boundary line portion and inclination information, thus making it possible to obscure a stepped portion by applying proper gradation interpolation.

While the above embodiment has described a case in which a gradation process is carried out by means of an RGB signal, of course, similar advantageous effect can be attained even by carrying out the above processing in steps of a YUV luminance signal or a color difference signal.

The following gradation interpolating process is carried out in the horizontal boundary gradation interpolating section A7 and the vertical boundary gradation interpolating section A8 shown in FIG. 2. However, the horizontal boundary gradation interpolating section A7 and the vertical boundary gradation interpolating section A8 can carry out any one of these gradation interpolating processes. However, a plurality of these processes are stored as a circuit configuration or program and the like. For example, according to a degree of inclination detected in the inclination detecting function of the horizontal detector circuit A5 and vertical detector circuit A6, it is preferred to achieve a desired inclination by selecting any one of these embodiments. However, gradation correction of a boundary line in units of frames can be carried out by preparing any one of the embodiments without being limited thereto.

### (First embodiment)

First, an example of a first embodiment of a gradation interpolating process as shown in FIG. 3 is shown here. This process is carried out in a horizontal boundary gradation interpolating section A17 or vertical boundary gradation interpolating section A18 shown in FIG. 14. Here, in the case where a predetermined formula is expressed by using an integer "m" and an integer "n" having a relationship of 2^{m} - 1 ≥ n, the pixel regions surrounded by 2ⁿ pixels in a direction parallel to a boundary line detected by a horizontal detector circuit A15 and a vertical detector circuit A16 and 2ⁿ pixels vertical to this boundary line are continuously allocated by (2ⁿ - 1) in a direction vertical to the boundary line at a position which includes the boundary line. Each of 2ⁿ x 2ⁿ pixel regions is intended to enable 2^{m}-step gradation expression by 2^{m} frames using the pixel values in front and back of the boundary line. Here, the pixel value of each image region is determined depending on a difference between the pixel values of the image region which comes into contact with the boundary line.

That is, in the case where n = 1, and m = 1, the pixel region surrounded by the two pixels in a direction parallel to a boundary line detected by the horizontal detector circuit A15 and vertical detector circuit A16 and the two pixels in a direction vertical to this boundary line enable two-step gradation expression by two frames using the pixel values in front and back of the boundary line. Here, the pixel value of each image region is determined depending on a difference between the pixel values of the image region which comes into contact with the boundary line.

In this manner, in accordance with this gradation interpolating process, a gradation pattern is changed in a two-frame cycle, whereby two gradations exceeding the gradation property intrinsic to a picture signal can be expressed, thus making it possible to eliminate an unnatural step when the user looks at the screen.

### (Second embodiment)

Similarly, a second embodiment shown in FIG. 4 shows an example of gradation correction in the case where n = 1, and m = 2 in the first embodiment. Similarly, in this method, a gradation pattern is changed at a four-frame cycle, whereby four gradations are expressed, making it possible to eliminate an unnatural step.

### (Third embodiment)

Similarly, a third embodiment shown in FIG. 5 shows an example of gradation correction in the case where n = 2, and m = 1 in the first embodiment. Similarly, in this method, a gradation pattern is changed at a two-frame cycle, whereby two gradations are expressed, making it possible to eliminate an unnatural step.

### (Fourth embodiment)

Similarly, a fourth embodiment shown in FIG. 6 shows an example of gradation correction in the case where n = 2, and m = 2 in the first embodiment. Similarly, in this method, a gradation pattern is changed at a four-frame cycle, whereby four gradations are expressed, making it possible to eliminate an unnatural step.

### (Fifth embodiment)

Now, a fifth embodiment shown in FIG. 7 will be described here. The gradation interpolating process used here is carried out by allocating a pixel region surrounded by (2ⁿ + 1) pixels in a direction parallel to a boundary line and 2ⁿ pixels in a direction vertical to the boundary line at a position which includes the boundary line; and determining the pixel value of each image region according to a difference between the pixel values of an image region which comes into contact with the boundary line so that, with respect to the pixel value of the region surrounded by (2ⁿ + 1) x 2ⁿ, a pixel train parallel to the boundary line enables (2ⁿ + 1) step gradation expression by (2ⁿ + 1) frames.

That is, in the case where n = 1, as shown in FIG. 7, gradation correction is carried out by allocating a pixel region surrounded by three pixels in a direction parallel to a boundary line and two pixels in a direction vertical to the boundary line at a position which includes the boundary line; and determining the pixel value of each image region depending on a difference between the pixel values of the image region which comes into contact with the boundary line. In this manner, three gradations can be expressed by changing a gradation pattern at a three-frame cycle.

### (Sixth embodiment)

Further, a sixth embodiment shown in FIG. 8 shows a gradation interpolating process in the case where n = 2 in the technique according to the fifth embodiment. Here, as shown in FIG. 8, five gradations can be expressed by changing a gradation pattern at a five-frame cycle.

### (Seventh embodiment)

Now, a tenth embodiment shown in FIG. 9 will be described here. Here, a pixel region surrounded by (n + 1) pixels in a direction parallel to a boundary line and "n" pixels in a direction vertical to the boundary line is allocated at a position which includes the boundary line, and the pixel value of each image region is determined depending on a difference between pixel values in front and back of the boundary line so that, with respect to the pixel value of the region surrounded by (n + 1) x n pixels, a pixel train parallel to the boundary line enables (n + 1) step gradation expression by (n + 1) frames. Here, by setting n = 1, two-gradation expression can be made by changing a gradation pattern at a two-frame cycle.

### (Eighth embodiment)

Further, an eighth embodiment shown in FIG. 10 shows a gradation interpolating process in the case where n = 3 in the technique according to the seventh embodiment. Here, as shown in FIG. 10, four gradations can be expressed by changing a gradation pattern at a four-frame cycle.

### (Ninth embodiment)

Further, in a ninth embodiment shown in FIG. 11, a pixel region surrounded by one pixel in a direction parallel to a boundary line and "n" pixels in a direction vertical to the boundary is allocated at a position which includes the boundary line, and the pixel value of each pixel region is determined depending on a difference between the pixel values in front and back of the boundary line so that, with respect to the pixel value of the region surrounded by 1 x n pixels, a pixel train parallel to the boundary line enables (n + 1) gradation expression by (n + 1) frames. Here, a gradation interpolating process in the case where n = 1 is shown. Here, as shown in FIG. 11, two gradations can be expressed by changing a gradation pattern at a two-frame cycle.

### (Tenth embodiment)

Now, a tenth embodiment shown in FIG. 12 will be described here. Here, in the technique according to the ninth embodiment, by setting n = 2, as shown in FIG. 12, three gradations can be expressed by changing a gradation pattern at a three-frame cycle.

While each of the foregoing embodiments has shown a case in which a brightness gradation changes from the left to the right, of course, the brightness may change from the right to the left, from the top to the bottom, or the bottom to the top.

A pixel pattern example in an image arrangement according to each of the embodiments is provided as a mere example, and, of course, similar advantageous effect can be attained as long as a pattern can express a desired gradation by an average value of a plurality of frames.

In this manner, a gradation interpolating process according to an embodiment of the invention is applied, thereby enabling gradation expression other than gradation property of a given picture signal. In this manner, it becomes possible to display a stripe pattern generated due to the roughness of conventional quantization on a screen or the like in an unclear state.

### <One embodiment of picture signal processor apparatus>

Now, with reference to the accompanying drawings, a description will be given with respect to a case in which the gradation interpolating circuit 1 according to the invention as shown in FIG. 2 described above has been applied to a picture signal processor apparatus such as a TV broadcast receivable PC.

### (Configuration)

FIG. 13 is a block diagram depicting a whole configuration of a TV broadcast receiving compatible PC according to an embodiment of a picture signal processor apparatus to which the present invention is applied. In FIG. 13, a TV broadcast receiver section 11 is shown. The TV broadcast receiver section 11 receives a user specified channel program, demodulates a TV signal, and demultiplexes a picture signal and a voice signal. Among them, the picture signal is sent to a video decoder 13 via a switch 12. The switch 12 is intended to select a TV picture signal and a picture signal from another picture reproducing device (such as a DVD player, for example).

The video decoder 13 converts an input picture signal to a baseband signal (YUV) and digitizes the converted signal. At this time, a picture signal is expressed as a gradation by eight bits. The digital picture signal is sent to a south bridge 15 via a PCI bus 14. The south bridge 15 houses a hard disk device (HDD) 16, an optical disk device (ODD) 17 and the like, and executes writing and readout of input data in recording media of these devices in accordance with a control command. The south bridge 15 is connected to a north bridge 18. The north bridge 18 controls data processing of the south bridge 15 in accordance with software processing using a main memory 20. That is, the picture signal input to the south bridge 15 is sent to the north bridge 18 based on a control command from the north bridge 18, image processing using software is applied to the signal, and then, the resulting image is sent to a graphic processor section 21.

The picture signal input to the graphic processor section 21 is formed in a pixel shape by a square scaler circuit 211, and a signal format is converted by a YUV/TGB converter circuit 212. Then, an image quality balance is adjusted by means of an image quality adjuster circuit 213, an image size is changed according to a display size by an α-blend/scaler circuit 214, and then, gradation correction is properly applied by a gradation processor circuit 215 according to the invention. The picture signal output from the gradation processor circuit 215 is converted to 6 bits in data size by the bit converter circuit 216, and the resulting signal is sent to a display device 23 via a D/A converter section 22.

That is, in the graphic processor section 21 with the above configuration, picture signal processing is carried out by eight bits in the same manner as is performed conventionally, and the resulting signal is converted to six bits at a portion at which the signal is output. Then, dithering is applied to an output picture signal at reduced 2 bits, for example, and the dithered signal is equivalent to eight bits in gradation expression. Therefore, in actuality, the maximum gradation which can be expressed is maintained so as to be equivalent to eight bits in an RGB image, although it is pseudo. At this time, a stripe pattern step occurs in a gradation region contained in a display image due to the roughness of quantization. According to the invention, the gradation processor circuit 215 detects the step of the stripe pattern generated in the gradation region contained in the display image and applies proper correction so that this step becomes obscure.

FIG. 14 is a block diagram depicting a specific configuration of the gradation processor circuit 215. The gradation processor circuit 215 is an approximate equivalent of the gradation processor circuit 1 described referring to FIG. 2. In FIG. 14, although there are three types of signal modes of input picture signals, i.e., RGB, a description will be given here as if these signals were one signal for the purpose of simplification.

In FIG. 14, the RGB signal output from the α-blend/scaler circuit 214 is input to each of the horizontal pixel value comparator circuit A11, a vertical pixel value comparator circuit A12, a 1H delay line A13, and an RGB frame memory circuit A14.

The horizontal pixel value comparator circuit A11 carries out serial comparison with respect to the pixel values of the adjacent two pixels. The horizontal detector circuit A15 detects each of a horizontal flat region, a horizontal boundary line, and a horizontal inclination by using a comparison result obtained by the comparator circuit A11. Specifically, a region in which a difference between the pixel values compared by the comparator circuit A11 is within a predetermined range is detected as a horizontal flat region (gradation region), and the boundary line in the horizontal direction of the detected region is obtained. In the case where a difference between the pixel values in front and back of the boundary line or a degree of change (inclination) is within the predetermined range, the boundary line in the horizontal direction is determined to be a step in the gradation region. In the case where the difference or degree of change is out of the predetermined range, it is determined to be a boundary line between other regions.

On the other hand, the vertical pixel value comparator circuit A12 captures a direct input of an RGB signal and an 1H-delayed RGB signal, and makes serial comparison with respect to the pixel values of two pixels. The vertical detector circuit A16 detects each of a vertical flat region, a vertical boundary line, and a vertical inclination by using a comparison result obtained by the comparator circuit A12. Specifically, a region in which a difference between the pixel values compared by the comparator circuit A12 is within a predetermined range is detected as a vertical flat region, and the boundary line in the vertical direction of the detected region is obtained. Then, in the case where the difference between the pixel values in front and back of the boundary line or the degree of change (inclination) is within the predetermined range, the boundary line in the vertical direction is determined to be a step in the gradation region. In the case where the difference or degree of change is out of the predetermined range, it is determined to be a boundary line between other regions.

The RGB frame memory circuit A14 ensures a time required for the above comparing/detecting process by delaying the input RGB signal by one frame. The thus one-frame delayed RGB signal is output from the gradation processor circuit 215 via the horizontal boundary gradation interpolating circuit A17 and the vertical boundary gradation interpolating circuit A18, and the resulting signal is sent to the bit converter circuit 216.

Here, as described preciously in detail with respect to FIG. 2, in the case where the horizontal detector circuit A15 has determined that the boundary line in the flat region is a step (boundary line) in the gradation (flat) region, the horizontal boundary gradation interpolating circuit A17 applies the gradation interpolating process described previously in detail in front and back of the boundary line, thereby obscuring a step of the boundary line portion. Similarly, in the case where the vertical detector circuit A16 has determined the boundary line in the flat region is a step in the gradation region, the vertical boundary gradation interpolating circuit A18 applies the gradation interpolating process described previously in detail in front and back of the boundary line, thereby obscuring the stripe line of the boundary line portion.

While the embodiment shown in FIG. 13 has described that a TV broadcast receiver section serves as an analog broadcast receiver section, of course, similar advantageous effect can be attained with respect to a digital broadcast.

In accordance with the above process, in the case where the receiver section has been applied to a picture processor apparatus such as, for example, a TV broadcast receiving compatible PC, similarly, a step (boundary line) of a stripe pattern generated in a gradation region can be detected to be distinguished from a boundary line by an icon. A gradation interpolating process is carried out as described later so that this boundary line portion becomes obscure.

### (Flat region detecting process/boundary line detecting process)

Now, a flat region detecting process/boundary line detecting process in a gradation processing method according to the invention will be described in detail with reference to a flow chart in particular.

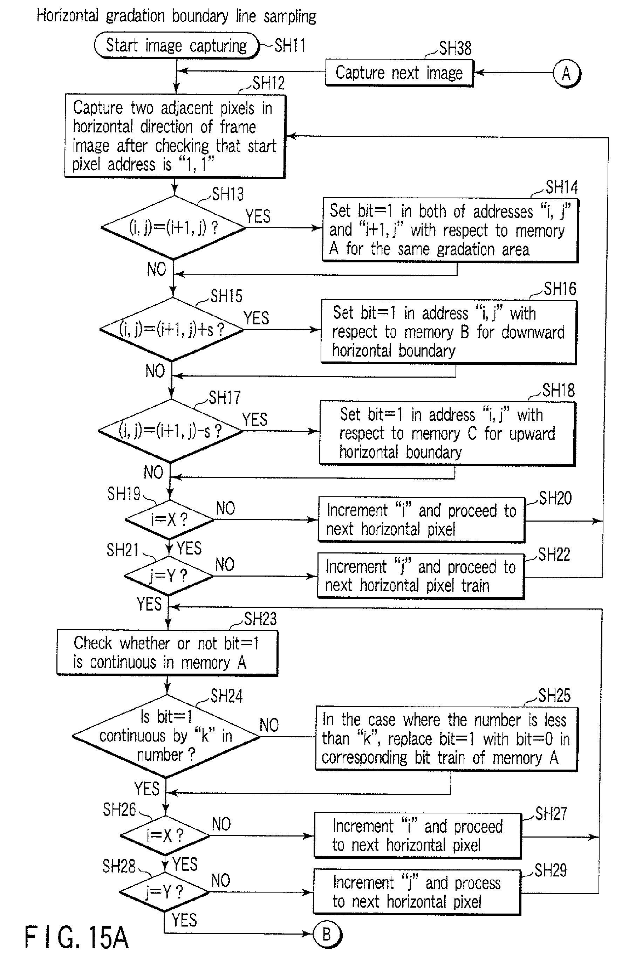

FIGS. 15A to 15D are flow charts each showing an algorithm in the case where the flat region detecting process/boundary line detecting process using each of the horizontal pixel value comparator circuit A11, the horizontal detector circuit A15, the vertical pixel value comparator circuit A12, and the vertical detector circuit A16 is achieved by software processing.

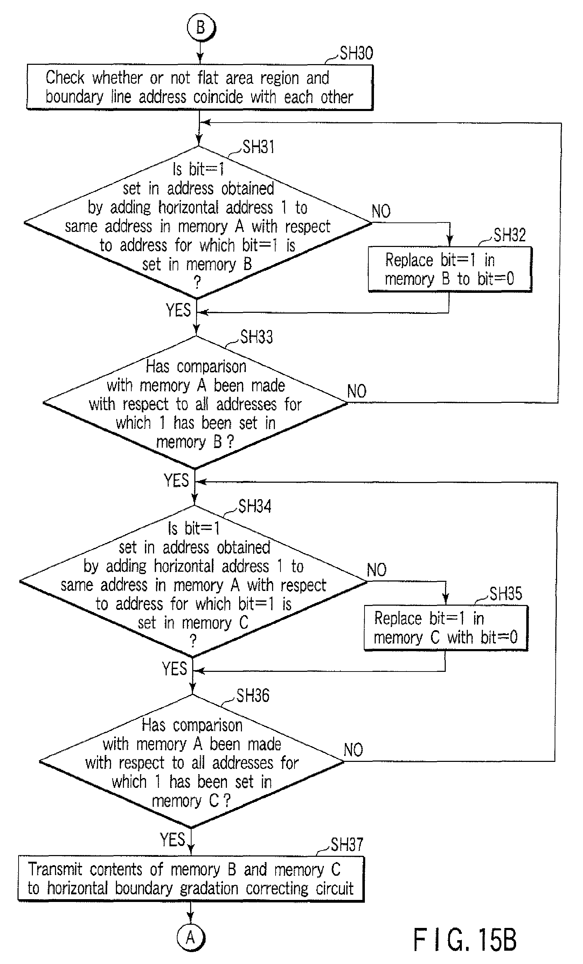

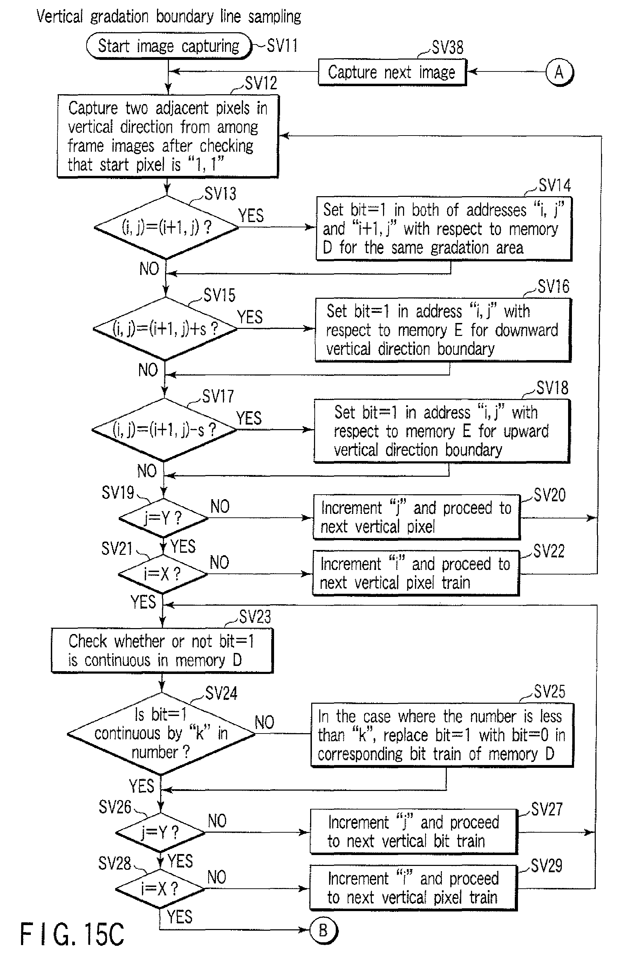

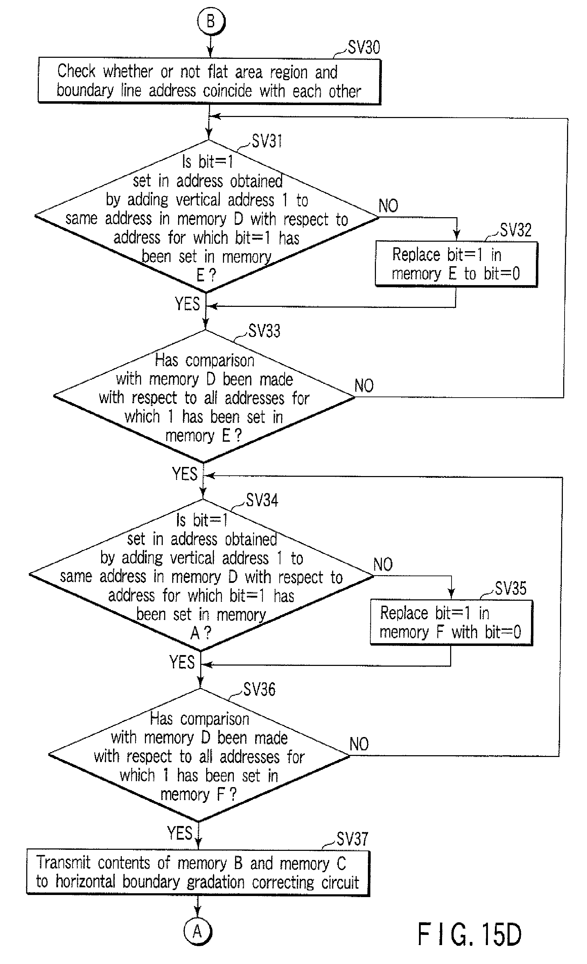

FIGS. 15A and 15B each show an example of carrying out a gradation step detecting process in a horizontal direction; and FIGS. 15C and 15D each show an example of carrying out a gradation step detecting process in a vertical direction. Here, it is conditionally assumed that image data is stored in the RGB frame memory circuit A14 and that an image space is defined as a horizontal X pixel and a vertical Y pixel. In addition, as an example of expression, "i, j" each denote memory horizontal and vertical addresses; (i, j) represents a pixel value of address "i, j"; "s" denotes the number of gradation steps; memory A denotes a storage memory for the same gradation area in a horizontal direction; memory B denotes a downward horizontal boundary line storage memory; memory C denotes an upward boundary line storage memory; memory D denotes a storage memory for the same gradation area in a vertical direction; memory E denotes a downward vertical boundary line storage memory; and memory F denotes an upward boundary line storage memory.

First, a description will be given with respect to a gradation step detecting process in a horizontal direction. The gradation step detection used here denotes detecting a flat region (gradation region), and further, detecting a step (boundary line) in the region.

In FIGS. 15A and 158, when image capturing is started in step SH11, the adjacent two pixels (i, j), (i+1, j) are captured in the horizontal direction of a frame image. A start pixel address is defined as "1, 1". Then, in step SH13, it is determined whether or not (i,j) = (i+1, j). When the determination result is NO, processing goes to step SH15. When the result is YES, processing goes to step SH14. In step SH14, bit = 1 is set in both of the addresses "i, j" and "i+1, j" with respect to memory A in the horizontal direction X and the vertical direction Y which coincide with an image space allocated for the same gradation area detection, and processing goes to step SH15.

In step SH15, it is determined whether or not (i, j) = (i+1, j) + s. When the determination result is NO, processing goes to step SH17. When the result is YES, processing goes to step SH16. In step SH16, bit = 1 is set in address "i, j" with respect to memory B in the horizontal direction X and the vertical direction which coincide with an image space allocated for downward horizontal boundary line detection.

In step Sh17, it is determined whether or not (i, j) = (i+1, j) - s. When the determination result is NO, processing goes to step SH19. When the result is YES, processing goes to step SH18. In step Sh18, bit = 1 is set in address "i, j" with respect to memory C in the horizontal direction X and the vertical direction Y which coincide with an image space allocate for upward horizontal boundary line detection, and processing goes to step SH19.

In step SH19, it is determined whether or not i = X has been established. When it has been not established (NO), processing goes to step SH20 in which "i" is incremented. Then, processing returns to step SH12 for next horizontal pixel capturing. When i = X has been established (YES), processing goes to step SH21 in which it is determined whether or not j = Y. When it has not been reached (NO), processing goes to step SH22 in which "j" is incremented. Then, processing returns to step SH12 for next horizontal pixel capturing.

In the case where j = Y has been established in the above step SH21 (YES), processing goes to step SH23. In the step SH23, it is checked whether or not bit = 1 is continuous in memory A. Then, processing goes to step SH24 in which it is checked whether or not bit = 1 is continuous by k or more in number. When k or more in number are continuous (YES), processing goes to step SH26. When it is not continuous (NO), processing goes to step SH25 in which bit = 1 in less than "k" bit trains is replaced with bit = 0. Then, processing goes to step SH26.

In the step SH26, it is determined whether or not i = X has been established. If it has not been established (NO), processing goes to step SH27 in which "i" is incremented. Then, processing returns to step SH23. When i = X has been established (YES), processing goes to step SH28 in which it is determined whether or not j = Y has been established. When it has not been established (NO), processing goes to step SH29 in which "j" is incremented, and processing goes to the next horizontal pixel train. Then, processing returns to step SH23.

In the case where j = Y has been established in the above step SH28 (YES), processing goes to step SH30 in which it is checked whether or not a flat area region and a boundary line address coincide with each other. Then, processing goes to step SH31 in which it is determined whether or not bit = 1 is set in an address obtained by adding horizontal address 1 to the same address in memory A with respect to an address for which bit = 1 is set in memory B. When bit = 1 is set (YES), processing goes to step SH33. When it is not set (NO), processing goes to step SH32 in which bit = 1 in memory B is replaced with bit = 0. Then, processing goes to step SH33. In the step SH33, it is determined whether or not comparison with memory A has been made with respect to all the addresses for which 1 has been set in memory B. In the case where the determination result is negative (NO), processing goes to step SH31. In the case where the determination result is affirmative (YES), processing goes to step SH34.

In step SH34, it is determined whether or not bit = 1 is set in an address obtained by adding horizontal address 1 to the same address in memory A with respect to an address for which bit = 1 is set in memory C. When bit = 1 is set (YES), processing goes to step SH36. When it is not set (NO), processing goes to step SH35 in which bit 1 in memory C is replaced with bit = 0. Then, processing goes to step SH36. In the step SH36, it is determined whether or not comparison with memory A has been made with respect to all the addresses for which 1 has been set in memory C. In the case where the determination result is negative (NO), processing returns to step SH34. In the case where the determination result is affirmative (YES), processing goes to step SH37.

In the step SH37, the contents of memory B and memory C are notified to the horizontal boundary gradation correcting circuit A17. Then, processing goes to step SH38 in which next image is captured. Then, processing returns to step SH12. In this manner, a gradation step detection processing in a horizontal direction as described in detail in the first to tenth embodiments completes.

Now, a description will be given with respect to a gradation step detecting process in a vertical direction. Similarly, the gradation step detection in the vertical direction used here denotes detecting a flat region (gradation region) while a frame image is in the vertical direction, and further, detecting a step (boundary line) in the region.

In FIGS. 15C and 15D, when image capturing is started in step SV11, first, adjacent two pixels (i, j) and (i, j + 1) in the vertical direction of a frame image is captured. A start pixel address is defined as "1, 1". Then, in step SV13, it is determined whether or not (i, j) = (i, j + 1) is established. When the determination result is NO, processing goes to step SV15. When the result is YES, processing goes to step SV14. In the step SV14, bit = 1 is set in both of the addresses "i, j" and "i, j + 1" with respect to memory D of the horizontal direction X and the vertical direction Y which coincide with an image space allocated for the same gradation area detection. Then, processing goes to step SV15.

In the step SV15, it is determined whether or not (i, j) = (i, j + 1) is established. When the determination result is NO, processing goes to step SV17. When the result is NO, processing goes to step SV16. In the step SV16, bit = 1 is set in the address "i, j" with respect to memory E of the horizontal direction X and the vertical direction Y which coincide with an image space allocated for downward vertical boundary detection. Then, processing goes to step SV17.

In the step SV17, it is determined whether or not (i, j) = (i, j + 1) - s is established. When the determination result is NO, processing goes to step SV19. When the result is YES, processing goes to step SV18. In the step SV18, bit = 1 is set in the address "i, j" with respect to memory F of the horizontal direction X and the vertical direction Y which coincide with an image space allocated for upward vertical line detection.

In the step SV19, it is determined whether or not j = Y has been established. If it has not been established (NO), processing goes to step SV20 in which "i" is incremented. Then, processing returns to step SV12 for next vertical and horizontal pixel capturing. When j = Y has been established (YES), processing goes to step SV21 in which it is determined whether or not i = X has been established. When it has not been established (NO), processing goes to step SV22 in which "i" is incremented. Then, processing returns to step SV12 for next vertical pixel train capturing.

In the case where i = X has been established in the above step SV21, processing goes to step SV23. In the step SV23, it is checked whether or not bit = 1 is continuous in memory D. Then, processing goes to step SV24 in which it is determined whether or not bit = 1 is continuous by k or more in number. When k or more in number are continuous (YES), processing goes to step SV26. In the case where it is not continuous (NO), processing goes to step SV25 in which bit = 1 in less than "k" bit trains of memory D is replaced with bit = 0. Then, processing goes to step SV26.

In the step SV26, it is determined whether or not j = Y has been established. If it has not been established (NO), processing goes to step SV27 in which "j" is incremented. Then, processing returns to step SV23. When j = Y has been established (YES), processing goes to step SV28 in which it is determined whether or not i = X has been established. When it has not been established (NO), processing goes to step SV29 in which "i" is incremented, and processing goes to the next vertical pixel train. Then, processing returns to step SV23.

In the case where i = X has been established in the above step SV28 (YES), processing goes to step SV30 in which it is checked whether or not a flat area region and a boundary line address coincide with each other. Then, processing goes to step SV31 in which it is determined whether or not bit = 1 is set in an address obtained by adding vertical address 1 to the same address in memory D with respect to an address for which bit = 1 has been set in memory E. When bit = 1 is set (YES), processing goes to step SV33. When it is not set (NO), processing goes to step SV32 in which bit = 1 in memory E is replaced with bit = 0. Then, processing goes to step SV33. In the step SV33, it is determined whether or not comparison with memory D has been made with respect to all the addresses for which 1 have been set in memory E. In the case where the determination result is negative (NO), processing returns to step SV31. In the case where the determination result is affirmative (YES), processing goes to step SV34.

In the step SV34, it is determined whether or not bit = 1 is set in an address obtained by adding vertical address 1 to the same address in memory D with respect to an address for which bit = 1 has been set in memory F. When bit = 1 is set (YES), processing goes to step SV36. When it is not set (NO), processing goes to step SV35 in which bit = 1 in memory F is replaced with bit = 0. Then, processing goes to step SV36. In the step SV36, it is determined whether or not comparison with memory D has been made with respect to all the addresses for which 1 has been set in memory F. In the case where the determination result is negative (NO), processing returns to step SV34. In the case where the determination result is affirmative (YES), processing goes to step S37.

In the step S37, the contents of memory E and memory F are notified to the vertical boundary line gradation correcting circuit A18. Then, processing goes to step SV38 in which a next image is captured. Then, processing returns to step SV12. In this manner, a gradation step detecting process in a vertical direction as described in detail in the first to tenth embodiments completes.

### <Example of television image receiver to which the present application is applied>

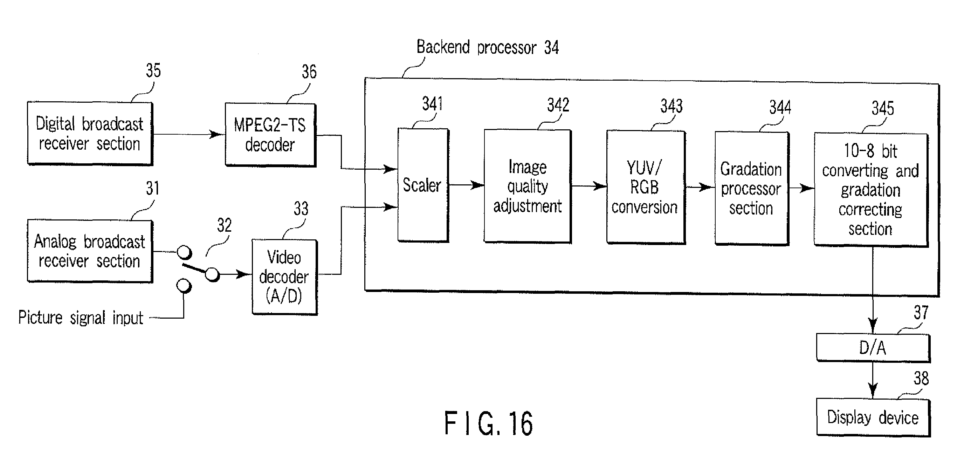

Now, a case in which a gradation interpolating process according to the invention has been applied to a television image receiver will be described with reference to the accompanying drawings. FIG. 16 shows a configuration in the case where the present invention has been applied to the television image receiver.

In FIG. 16, a picture signal output and a picture signal line input from an analog broadcast receiver section 31 are arbitrarily changed by a switch 32, and are digitized as a baseband signal (YUV) by a video decoder circuit 33. The digitized signal is sent to a backend processor 34. On the other hand, a digital broadcast signal received by a digital broadcast receiver section 35 is also sent to the backend processor 34 similarly after a picture signal has been demodulated by an MPEG2-TS decoder circuit 36.

Each of the picture signals sent to the backend processor 34 is adjusted in image size by means of a scaler 341, and an image quality is adjusted by an image quality adjuster circuit 342. Then, the resulting signal is converted to a YUV-RGB signal by an RGB converter circuit 343, and correction of a gradation step portion is applied by a gradation processor circuit 344 according to the invention. Finally, after two bits have been reduced by a bit converting/gradating correcting circuit 345, a gradation is corrected by means of frame rate control (FRC). The gradation-corrected signal is D/A-converted by means of a D/A converter 35, and then, the converted signal is sent to a display section 36. The gradation processor circuit 344 is configured as shown in FIG. 37. A circuit configuration is identical to that shown in FIG. 14. Thus, same constituent elements are designated by same reference numerals. An explanation is not repeated here.

That is, in the television image receiver with the above configuration, the backend processor 34 processes a picture signal by 10 bits, and converts the processed image to eight bits at a final stage so as to apply gradation correction. With respect to such a processor 34, a gradation processor circuit 34 according to the invention is disposed in front of the bit converting/gradation correcting circuit 345 at the final stage, thereby detecting a step portion (boundary line portion) in a gradation region and carrying out a gradation interpolating process at a boundary line portion as described in detail in FIGS. 1 to 12, for example. In this manner, the boundary line portion is expressed to be equivalent to 12 bits; a step portion in the gradation region becomes obscure; and a visually very smooth gradation display can be achieved.

While the present embodiment has described a case in which a gradation process is carried out by an RGB signal, of course, similar advantageous effect can be attained even if this process is carried out at the stage of a YUV signal.

The present invention is not limited to the above-described embodiments, and can be embodied by variously modifying constituent elements without departing from the spirit of the invention at the stage of carrying out the invention. In addition, a variety of inventions can be formed by properly combining a plurality of constituent elements disclosed in the above-described embodiments. For example, some of all the constituent elements disclosed in the embodiments may be eliminated. Further, constituent elements according to the different embodiments may be properly combined with each other.

## Claims

1. A gradation interpolating circuit (1, A7, A8, A17, A18) configured to:
receive an image signal having a boundary line; and
change a gradation pattern (FIG. 3-FIG. 12) in a plurality of frames (F0-F5) in accordance with a predetermined formula, with respect to an image in a region surrounded by a pixel parallel to the boundary line and a pixel vertical thereto, thereby reconstructing a pixel value to further express an intermediate gradation of an image in a region in front and back of the boundary line.

2. A gradation interpolating circuit according to claim 1, **characterized in that**, in the case where the predetermined formula is represented by using an integer "m" and an integer "n" having a relationship of 2^{m} - 1 ≥ n, a process according to the predetermined formula is configured to continuously allocate pixel regions surrounded by 2ⁿ pixels in a direction parallel to a boundary line and 2ⁿ pixels vertical to the boundary line by (2ⁿ - 1) in a direction vertical to the boundary line at a position which includes the boundary line and to reconstruct a pixel value for each frame in the image region so that a 2ⁿ x 2ⁿ pixel region of each thereof enables 2m-stage gradation expression by 2m frames by using pixel values in front and back of the boundary line.

3. A gradation interpolating circuit according to claim 1, **characterized in that** a process according to the predetermined formula is configured to allocate a pixel region surrounded by (2ⁿ + 1) pixels in a direction parallel to a boundary line and 2ⁿ pixels in a direction vertical to the boundary line at a position which includes the boundary line and to reconstruct a pixel value for each frame of the image region so that, with respect to a pixel region surrounded by (2ⁿ + 1) x 2ⁿ, a pixel train parallel to the boundary line enables (2ⁿ + 1) stage gradation expression by (2ⁿ + 1) frames.

4. A gradation interpolating circuit according to claim 1, **characterized in that** a process according to the predetermined formula is configured to allocate a pixel region surrounded by (n + 1) pixels in a direction parallel to the boundary line and "n" pixels in a direction vertical to the boundary line at a position which includes the boundary line and to reconstruct a pixel value for each frame of the image region so that, with respect to a pixel value of a region surrounded by (n + 1) x n pixels, a pixel train parallel to the boundary line enables (n + 1) gradation expression by (n + 1) frames.

5. A gradation interpolating circuit according to claim 1, **characterized in that** a process according to the predetermined formula is configured to allocate a pixel region surrounded by one pixel in a direction parallel to the boundary line and "n" pixels in a direction vertical to the boundary line at a position which includes the boundary line and to reconstruct a pixel value for each frame of the image region so that, with respect to a pixel value in a region surrounded by 1 x n pixels, a pixel train parallel to the boundary line enables (n + 1) gradation expression by (n + 1) frames.

6. A gradation interpolating circuit according to claim 1, **characterized in that** a process according to the predetermined formula is configured to be applied in a horizontal direction of the image signal, and further, to be applied in a vertical direction of the same image signal.

7. A gradation interpolating circuit according to claim 1, **characterized in that** a process according to the predetermined formula is configured to be independently carried out with respect to R, G, and B which are color signals of the image signal.

8. A gradation interpolating circuit according to claim 1, **characterized in that** a process according to the predetermined formula is configured to be independently carried out with respect to a luminance signal and a color difference signal of the image signal.

9. A gradation interpolating method configured to:
receive an image signal having a boundary line; and
change a gradation pattern (FIG. 3-FIG. 12) in a plurality of frames (F0-F5) in accordance with a predetermined formula, with respect to an image in a region surrounded by a pixel parallel to the boundary line and a pixel vertical thereto, thereby reconstructing a pixel value to further express an intermediate gradation of an image in a region in front and back of the boundary line.

10. A gradation interpolating method according to claim 9, **characterized in that** in the case where the predetermined formula is represented by using an integer "m" and an integer "n" having a relationship of 2^{m} - 1 ≥ n, a process according to the predetermined formula is configured to continuously allocate pixel regions surrounded by 2ⁿ pixels in a direction parallel to a boundary line and 2ⁿ pixels vertical to the boundary line by (2^{m} - 1) in a direction vertical to the boundary line at a position which includes the boundary line and to reconstruct a pixel value for each frame in the image region so that a 2ⁿ x 2ⁿ pixel region of each thereof enables 2^{m}-stage gradation expression by 2^{m} frames by using pixel values in front and back of the boundary line.

11. A gradation interpolating method according to claim 9, **characterized in that** a process according to the predetermined formula is configured to allocate a pixel region surrounded by (2ⁿ + 1) pixels in a direction parallel to a boundary line and 2ⁿ pixels in a direction vertical to the boundary line at a position which includes the boundary line and to reconstruct a pixel value for each frame of the image region so that, with respect to a pixel region surrounded by (2ⁿ + 1) x 2ⁿ, a pixel train parallel to the boundary line enables (2ⁿ + 1) stage gradation expression by (2ⁿ + 1) frames.

12. A gradation interpolating method according to claim 9, **characterized in that** a process according to the predetermined formula is configured to allocate a pixel region surrounded by (n + 1) pixels in a direction parallel to the boundary line and "n" pixels in a direction vertical to the boundary line at a position which includes the boundary line and to reconstruct a pixel value for each frame of the image region so that, with respect to a pixel value of a region surrounded by (n + 1) x n pixels, a pixel train parallel to the boundary line enables (n + 1) gradation expression by (n + 1) frames.

13. A gradation interpolating method according to claim 9, **characterized in that** a process according to the predetermined formula is configured to allocate a pixel region surrounded by one pixel in a direction parallel to the boundary line and "n" pixels in a direction vertical to the boundary line at a position which includes the boundary line and to reconstruct a pixel value for each frame of the image region so that, with respect to a pixel value in a region surrounded by 1 x n pixels, a pixel train parallel to the boundary line enables (n + 1) gradation expression by (n + 1) frames.

14. A gradation interpolating method according to claim 9, **characterized in that** a process according to the predetermined formula is configured to be applied in a horizontal direction of the image signal, and further, to be applied in a vertical direction of the same image signal.

15. A gradation interpolating method according to claim 9, **characterized in that** a process according to the predetermined formula is configured to be independently carried out with respect to R, G, and B which are color signals of the image signal.

16. A gradation interpolating method according to claim 9, **characterized in that** a process according to the predetermined formula is configured to be independently carried out with respect to a luminance signal and a color difference signal of the image signal.
